# EUROPÄISCHE PATENTANMELDUNG

(11) **EP 4 272 891 A1**
(43) Veröffentlichungstag der Anmeldung: **08.11.2023**
(21) Anmeldenummer: 23167904.4
(22) Anmeldetag: 14.04.2023
(51) Int. Cl.: B23D 63/14, B23D 63/00

(54) **VERFAHREN UND VORRICHTUNG ZUM BEARBEITEN EINER MEHRZAHL VON SCHNEIDEN EINES SCHNEIDWERKZEUGS, INSBESONDERE EINES KREISSÄGEBLATTS ODER EINES BANDSÄGEBLATTS, MIT EINEM BEARBEITUNGSWERKZEUG**

(30) Priorität: 14.04.2022 DE 102022109297
(71) Anmelder: VOLLMER WERKE Maschinenfabrik GmbH, 88400 Biberach/Riss (DE)
(72) Erfinder: Hepp, Klaus, 88525 Heudorf (DE); Wenger, Thomas, 88437 Maselheim (DE)
(74) Vertreter: Thum, Bernhard

(57) **Zusammenfassung**

Die Erfindung betrifft eine Vorrichtung und ein Verfahren zum Bearbeiten einer Mehrzahl von Schneiden (50) eines Schneidwerkzeugs, insbesondere eines Kreissägeblatts (12) oder eines Bandsägeblatts, mit einem Bearbeitungswerkzeug (32) umfassend die Schritte:
A) Auswählen einer zu bearbeitenden Schneide (50) des Schneidwerkzeugs;
B) Auswählen eines Startpunkts (S) bezüglich der ausgewählten zu bearbeitenden Schneide (50) des Schneidwerkzeugs;
C) Anfahren des ausgewählten Startpunkts (S) der zu bearbeitenden Schneide (50) mit dem Bearbeitungswerkzeugs (32) mit einer Anfahrgeschwindigkeit;
D) Ausführen einer Bearbeitungsbewegung an der ausgewählten zu bearbeitenden Schneide (50) mit dem Bearbeitungswerkzeugs (32), wobei die Bearbeitungsbewegung von dem Startpunkt (S) ausgeht, sich entlang einer zu bearbeitenden Fläche der ausgewählten zu bearbeitenden Schneide (50) erstreckt und an einem Endpunkt (E) der Bearbeitung endet und wobei die Bearbeitungsbewegung mit einer Bearbeitungsgeschwindigkeit durchgeführt wird;
E) Erfassen einer Freilaufstrecke (F) entlang der Bearbeitungsbewegung an der ausgewählten zu bearbeitenden Schneide (50) zwischen dem ausgewählten Startpunkt (S) und einem Kontaktpunkt (K), an dem das Bearbeitungswerkzeugs (32) die zu bearbeitende Schneide (50) erstmals berührt; und
F) Anfahren des Kontaktpunkts (K), an einer darauffolgend zu bearbeitenden Schneide (50) des Schneidwerkzeugs mit der Anfahrgeschwindigkeit unter Berücksichtigung der in Schritt E) erfassten Freilaufstrecke (F).

## Beschreibung

Die vorliegende Erfindung betrifft ein Verfahren zum Bearbeiten einer Mehrzahl von Schneiden eines Schneidwerkzeugs, insbesondere eines Kreissägeblatts oder eines Bandsägeblatts, mit einem Bearbeitungswerkzeug gemäß Patentanspruch 1 sowie eine Vorrichtung zum Bearbeiten einer Mehrzahl von Schneiden eines Schneidwerkzeugs, insbesondere eines Kreissägeblatts oder eines Bandsägeblatts, mit einem Bearbeitungswerkzeug gemäß Patentanspruch 13.

Vorrichtungen und Verfahren zum Schleifbearbeiten verschiedenartiger Werkstücke sind aus dem Stand der Technik bekannt.

Beispielsweise beschreibt das Dokument DD 210 389 eine Vorrichtung und ein Verfahren zum Schleifen, insbesondere zum Innenrundschleifen, von Werkstücken. Danach ist vorgesehen, die Bearbeitungsleistung mittels eines Akustiksensors, beispielsweise eine Schallsensors oder Körperschallsensors, zu erfassen und den Schleifprozess unter Berücksichtigung der dadurch gemessenen Parameter zu optimieren. Hintergrund dieser Herangehensweise ist die Überwachung schleifkörperspezifischer Eigenschaften während des Schleifenprozesses.

Das Dokument DE 27 35 894 A1 betrifft ein Verfahren für ein zeitoptimiertes mehrfaches Zustellen einer Schleifscheibe einer Schleifmaschine bei einer mehrstufigen Schleifbearbeitung eines Werkstücks. Dabei ist vorgesehen, dass ein Kontakt zwischen der Schleifscheibe und dem zu bearbeitenden Werkstück beispielsweise mittels eines Akustiksensors erfasst wird. In Abhängigkeit davon, ob ein Kontakt besteht, wird die Vorschubgeschwindigkeit gesteuert. Dadurch ist es möglich, die Schleifscheibe so lange mit einer erhöhten Vorschubgeschwindigkeit auf das Werkstück zuzustellen, bis diese in Kontakt mit dem Werkstück gelangt. Nach erfolgtem Kontakt wird die Geschwindigkeit reduziert.

Ferner ist aus dem Stand der Technik das System SENSITRON6^{®} der Firma Dittel Messtechnik GmbH bekannt. Auch dieses System ermöglicht es, im Rahmen eines Bearbeitungsprozesses einen mechanischen Kontakt zwischen einem Bearbeitungswerkzeug und einem Werkstück mittels eines Akustiksensors zu erfassen und nach Maßgabe der Erfassung des Kontakts dann die Zustellgeschwindigkeit zu reduzieren.

Auch das Dokument DE 38 298 25 C2 beschreibt ein Verfahren und eine Vorrichtung zur Überwachung einer spanabhebenden Drehbearbeitung eines Werkstücks. Gemäß der Lehre dieses Dokuments wird die Bearbeitung des Werkstücks mittels eines Akustiksensors überwacht, um Rückschlüsse auf den Bearbeitungsprozess schließen zu können.

Darüber hinaus beschreibt die Patentschrift DE 197 43 528 C1 der Anmelderin eine Messeinrichtung sowie eine Vorrichtung zum Bearbeiten von Werkstücken mit Schneidezähnen, insbesondere Sägeblättern. Gemäß der Lehre dieser Patentschrift ist vorgesehen, dass bei einem Kontakt zwischen dem Bearbeitungswerkzeug und Werkstück ein Stromkreis geschlossen und damit das Erreichen eines Kontaktpunkts erfasst wird. Anhand dieser Erfassung kann die Position eines bestimmten Schneidzahns des zu bearbeitenden Werkstücks relativ zur Werkstückhalterung bestimmt werden. Dies erlaubt Rückschlüsse auf die Lage des Werkstücks, mögliche Abweichungen bei der Positionierung des Werkstücks über einem Werkzeugschlitten bzw. einer Werkstückhalterung sowie den Zustand des Werkzeugs. Im Ergebnis kann dann nach Maßgabe der Position des erfassten Kontaktpunkts die Bearbeitung angepasst werden.

Die weitere Patentschrift DE 198 04 762 B4 der Anmelderin betrifft ein Verfahren und eine Vorrichtung zum Schleifen verschiedener Flächen von Zähnen eines Sägewerkzeugs. Gemäß diesem Verfahren ist vorgesehen, das Werkstück zur Erkennung seiner Geometrie, insbesondere der Zahnteilung, mit einer Abtastvorrichtung abzutasten und anhand des dadurch erzielten Abtastergebnisses dann eine Bearbeitung vorzunehmen.

Zudem offenbart das Dokument JP 2002 - 1 654 A eine automatische Schleifmaschine zum Schleifen von Sägezähnen eines Bandsägeblatts, umfassend eine Mustererkennungskontrolleinheit und einen Sensor. Mittels des Sensors werden Vibrationen erfasst, die entstehen, wenn eine Schleifscheibe der Schleifmaschine einen Sägezahn kontaktiert. Die Mustererkennungskontrolleinheit erkennt dadurch eine Position von der Schleifscheibe zu dem Zeitpunkt des ersten Kontakts und hinterlegt diese als Startpunkt. Das Schleifen eines folgenden Sägezahns wird auf der Grundlage des Startpunkts durchgeführt.

Es hat sich gezeigt, dass gerade die Bearbeitung von Schneidwerkzeugen, beispielsweise im Rahmen eines Schärfens von einzelnen Schneiden eines solchen Schneidwerkzeugs, besondere Anforderungen an die Bearbeitungsqualität stellt. Insbesondere lässt sich mit Bearbeitungsprozessen gemäß dem Stand der Technik, bei denen ein Kontakt zwischen der zu bearbeitenden Oberfläche der betreffenden Schneide des Schneidwerkzeugs und dem Bearbeitungswerkzeug in Echtzeit erfasst wird und nach Maßgabe des Auftretens des Kontakts dieser Komponenten zueinander dann der Bearbeitungsprozess gesteuert wird, häufig nicht die gewünschte Oberflächenqualität erzielen. Darüber hinaus besteht bei der Bearbeitung von Schneidwerkzeugen mit einer großen Zähnezahl Bedarf für ein zeitsparendes Verfahren, mit dem zugleich eine hohe Bearbeitungsqualität erzielt werden kann.

Ferner stellt sich das Problem, bei Schneidwerkzeugen mit einer Ungleichteilung trotz der unregelmäßigen Anordnung der Schneiden eine schnelle und damit wirtschaftliche Bearbeitung durchführen zu können. Gleiches gilt für die Bearbeitung von bereits teilweise verschlissenen Schneidwerkzeugs, beispielsweise beim Schärfen von Kreissägeblättern, wobei wiederum unregelmäßig verschlissen Zähne und Zahngeometrien auftreten können. Dies erfordert insbesondere lange Leerlaufwege, in denen das Bearbeitungswerkzeug relativ zum Schneidwerkzeugs zugestellt werden muss. Dies verlängert die Dauer des Bearbeitungsprozesses. Dazu kommt, dass unterschiedliche Zähne auch zu unterschiedlich langen zu bearbeitenden Flächen führen. Dementsprechend muss die Bearbeitungsbewegung standardmäßig ausreichend lang gewählt werden. Auch dies erhöht die Bearbeitungsdauer.

Um die vorstehend genannten Probleme des Stands der Technik zu lösen, sieht die vorliegende Erfindung vor, ein Verfahren zum Bearbeiten einer Mehrzahl von Schneiden eines Schneidwerkzeugs, insbesondere eines Kreissägeblatts oder eines Bandsägeblatts, mit einem Bearbeitungswerkzeug bereitzustellen, das die folgenden Schritte umfasst:
A) Auswählen einer zu bearbeitenden Schneide des Schneidwerkzeugs;
B) Auswählen eines Startpunkts bezüglich der ausgewählten zu bearbeitenden Schneide des Schneidwerkzeugs;
C) Anfahren des ausgewählten Startpunkts der zu bearbeitenden Schneide mit dem Bearbeitungswerkzeug mit einer Anfahrgeschwindigkeit;
D) Ausführen einer Bearbeitungsbewegung an der ausgewählten zu bearbeitenden Schneide mit dem Bearbeitungswerkzeug, wobei die Bearbeitungsbewegung von dem Startpunkt ausgeht, sich entlang einer zu bearbeitenden Fläche der ausgewählten zu bearbeitenden Schneide erstreckt und an einem Endpunkt der Bearbeitung endet und wobei die Bearbeitungsbewegung mit einer Bearbeitungsgeschwindigkeit durchgeführt wird;
E) Erfassen einer Freilaufstrecke entlang der Bearbeitungsbewegung an der ausgewählten zu bearbeitenden Schneide zwischen dem ausgewählten Startpunkt und einem Kontaktpunkt, an dem das Bearbeitungswerkzeug die zu bearbeitende Schneide erstmals berührt; und
F) Anfahren des Kontaktpunkts an einer darauffolgend zu bearbeitenden Schneide des Schneidwerkzeugs mit der Anfahrgeschwindigkeit unter Berücksichtigung der in Schritt E) erfassten Freilaufstrecke.

Mit dem erfindungsgemäßen Verfahren ist es also möglich, zunächst eine zu bearbeitende Schneide des Schneidwerkzeugs mit dem Bearbeitungswerkzeug mit einer bestimmten Anfahrgeschwindigkeit anzufahren, die Bearbeitungsbewegung zwischen dem Startpunkt und dem Endpunkt mit der Bearbeitungsgeschwindigkeit durchzuführen, wobei der Kontaktpunkt zwischen Schneidwerkzeug und Bearbeitungswerkzeug ermittelt wird und dann anhand des ermittelten Kontaktpunkts die Freilaufstrecke zu erfassen, d. h. diejenige Strecke entlang der Bearbeitungsbewegung, in der noch keine Bearbeitung stattfand. Diese Freilaufstrecke kann dann bei folgenden Bearbeitungen an derselben Schneide oder an folgenden zu bearbeitenden Schneiden bei der Zustellung des Bearbeitungswerkzeugs ausgespart oder zumindest schneller durchlaufen werden, um den Prozess zu beschleunigen. Diese Vorgehensweise führt zu erheblichen Zeiteinsparungen und zur Erhöhung der Wirtschaftlichkeit des Verfahrens, ohne die Bearbeitungsqualität zu beeinträchtigen.

Dieses Verfahren wird bevorzugt kontinuierlich durchgeführt. Dies bedeutet, dass das Verfahren dynamisch bei jeder zu bearbeitenden Schneide feststellt, wo tatsächlich der Kontaktpunkt liegt. Dadurch ist es möglich, einen sich wiederholenden dynamischen Lernprozess zu durchlaufen, bei dem erkannt oder ermittelt wird, wo der Kontaktpunkt, der aktuell zu bearbeitenden Schneide liegt. In Kenntnis des Kontaktpunkts lässt sich die zu bearbeitende Schneide unter Vermeidung eines langsamen Durchlaufens aus der Freilaufstrecke Zeitspanne bearbeiten. Dadurch lässt sich der Bearbeitungsprozess optimieren. Ferner lässt sich die Länge der Bearbeitungsbewegung an die jeweilige zu bearbeitende Schneide optimal anpassen und die Länge der durchlaufenen Freilaufstrecke bei jeder bearbeiteten Schneide minimieren.

In diesem Zusammenhang ist darauf hinzuweisen, dass es bei Anwendung des Verfahrens gemäß der vorliegenden Erfindung nicht erforderlich ist, den Bearbeitungsprozess nach Maßgabe eines tatsächlichen Kontakts zwischen dem Schneidwerkzeugs und dem Bearbeitungswerkzeug durchzuführen. Vielmehr wird bei Erreichen des Kontaktpunkts das Bearbeitungswerkzeug bereits entlang der Bearbeitungsbewegung mit der Bearbeitungsgeschwindigkeit geführt. Dadurch kann vermieden werden, dass das Bearbeitungswerkzeug mit zu hoher Zustellgeschwindigkeit, nämlich der Anfahrgeschwindigkeit, an die zu bearbeitende Schneide des Schneidwerkzeugs herangeführt und mit dieser in Kontakt gebracht wird, wobei es aufgrund der relativ hohen Anfahrgeschwindigkeit häufig zu einer reduzierten Bearbeitungsgüte der zu bearbeitenden Schneide kommen kann.

Eine Weiterbildung der Erfindung sieht vor, dass beim Anfahren des Kontaktpunkts an der darauffolgend zu bearbeitenden Schneide des Schneidwerkzeugs gemäß Schritt F) die Bearbeitungsbewegung um die Freilaufstrecke verkürzt wird. Dies empfiehlt sich insbesondere dann, wenn eine gleiche wiederkehrende Zahnteilung an dem zu bearbeitenden Schneidwerkzeugs vorliegt, d.h. es wird ein Schneidwerkzeugs mit Gleichteilung bearbeitet. Diese Vorgehensweise empfiehlt sich aber auch dann, wenn die Geometrie des zu bearbeitenden Schneidwerkzeugs vorbekannt ist. Im letztgenannten Fall kann damit ohne weiteres auch ein Schneidwerkzeug mit Ungleichteilung unter Berücksichtigung seiner vorbekannten Geometrie schnell und zeitsparend Zahn für Zahn oder auch nur an ausgewählten Zähnen bearbeitet werden.

Darüber hinaus kann erfahrungsgemäß vorgesehen sein, dass beim Anfahren des Kontaktpunkts an der darauffolgend zu bearbeitenden Schneide des Schneidwerkzeugs gemäß Schritt F) ein Sicherheitsfaktor berücksichtigt wird. Dadurch ist es möglich, zu vermeiden, dass das Bearbeitungswerkzeug mit zu hoher Geschwindigkeit an die zu bearbeitende Schneide des Schneidwerkzeugs heranfährt und diese unerwünscht mit zu hoher Geschwindigkeit des Bearbeitungswerkzeugs kontaktiert.

Ferner ist es bei einer Ausführungsvariante der Erfindung möglich, dass die darauffolgend zu bearbeitende Schneide gemäß Schritt F) die gemäß den Schritten A) bis E) bereits bearbeitete Schneide des Schneidwerkzeugs ist. In einer solchen Situation wird das erfindungsgemäße Verfahren bei einer sogenannten oszillierenden Bearbeitung einer bestimmten Schneide eingesetzt, beispielsweise derart, dass die jeweilige Schneide in einem ersten Bearbeitungsschritt an einer ersten Fläche bearbeitet wird, beispielsweise an einer Freifläche, und in einem darauf folgenden Bearbeitungschritt dieselbe Schneide an derselben Fläche oder an einer sich hiervon unterscheidenden weiteren Fläche, beispielsweise einer seitlichen Fase bearbeitet wird. Bei der auf die erste Bearbeitung (hier der Freifläche) folgenden Bearbeitung dieser Schneide lässt sich die Kenntnis über den Kontaktpunkt zeitsparend ausnutzen, sodass das Bearbeitungswerkzeug gleich mit hoher Zustellgeschwindigkeit an den Startpunkt in unmittelbarer Nähe des Kontaktpunkts herangefahren und in der Folge dann die Bearbeitungsbewegung mit der Bearbeitungsgeschwindigkeit durchgeführt wird.

Alternativ zu einer derartigen oszillierenden Bearbeitung an ein und derselben Schneide kann vorgesehen sein, dass die darauffolgend zu bearbeitende Schneide gemäß Schritt F) eine sich von der gemäß den Schritten A) bis E) bereits bearbeiteten Schneide unterscheidende weitere Schneide des Schneidwerkzeugs ist. Auch bei dieser Bearbeitung zweier unterschiedlicher Schneiden in aufeinanderfolgenden Bearbeitungsschritten kann das vorliegende Verfahren zeitsparend eingesetzt werden, insbesondere dann, wenn bereits Kenntnis über die Geometrie des Schneidwerkzeugs vorliegt oder eine Gleichteilung der Schneiden des Schneidwerkzeugs gegeben ist. Mit anderen Worten kann erfindungsgemäß vorgesehen sein, dass in Schritt F) eine vorbekannte Geometrie des Schneidwerkzeugs berücksichtigt wird.

Gemäß einer weiteren Ausführungsvariante des erfindungsgemäßen Verfahrens kann ferner vorgesehen sein, dass sich die Anfahrgeschwindigkeit und die Bearbeitungsgeschwindigkeit betragsmäßig unterscheiden, wobei insbesondere die Bearbeitungsgeschwindigkeit gegenüber der Anfahrgeschwindigkeit reduziert ist. Dadurch lässt sich grundsätzlich eine Zeitersparnis erreichen, weil die Zustellgeschwindigkeit beim Zustellen an den Kontaktpunkt höher gewählt werden kann als die Bearbeitungsgeschwindigkeit. Selbst wenn aber die Zustellgeschwindigkeit nicht verändert wird, d. h. selbst dann, wenn die Anfahrgeschwindigkeit und die Bearbeitungsgeschwindigkeit betragsmäßig in etwa gleich groß sind, kann immer noch eine Zeitersparnis gegenüber dem Stand der Technik erzielt werden, weil durch die Kenntnis der Lage des Kontaktpunkts an der zu bearbeitenden Schneide der Startpunkt entsprechend nahe dem Kontaktpunkt gewählt und dadurch die Freilaufstrecke erheblich verkürzt werden kann. Es kann also die Bearbeitungsbewegung in ihrer Länge durch geeignete Lage des Startpunkts nach Maßgabe der Kenntnis des Kontaktpunkts tatsächlich an den zu bearbeitenden Zahn angepasst werden.

Gemäß einer zusätzlichen Ausführungsvariante der Erfindung ist vorgesehen, dass der Kontaktpunkt oder/und Endpunkt der Bearbeitung anhand von Bearbeitungsparametern erfasst wird. Neben der vorstehend bereits ausführlich diskutierten Erfassung der Lage des Kontaktpunkts ist auch die Lage des Endpunkts von Bedeutung. Dies liegt insbesondere daran, dass mit Kenntnis des Endpunkts, d. h. des Ortes bei der Bearbeitung einer bestimmten Schneide entlang der Bearbeitungsbewegung, an der das Bearbeitungswerkzeug gerade nicht mehr spanabhebend bzw. materialabtragend an der aktuell bearbeiteten Schneide angreift, auch die Bearbeitungsbewegung angepasst werden kann. So kann auch eine nachlaufende Freilaufstrecke nach Ende der Bearbeitung der betreffenden Schneide gänzlich verhindert oder zumindest substanziell verkürzt werden. Durch Erfassung des Endpunkts kann also die Bearbeitungsbewegung verkürzt werden.

Insgesamt erlaubt die Erfassung des Kontaktpunkts und des Endpunkts eine schneidenspezifische oder/und schneidwerkzeugspezifische Optimierung des Verfahrens. Im Hinblick auf die Erfassung des Kontaktpunkts oder/und des Endpunkts kann erfindungsgemäß vorgesehen sein, dass die Bearbeitungsparameter wenigstens einen der folgenden Parameter umfassen, anhand derer sich ein Kontakt zwischen dem Bearbeitungswerkzeug und dem zu bearbeitenden Schneidwerkzeugs ermitteln lässt:
- akustische Parameter,
- elektrische Parameter,
- optische Parameter.

Dabei können entsprechende Sensoren, wie beispielsweise Akustiksensoren, elektrische Sensoren oder optische Sensoren eingesetzt werden.

Während die Erfassung des Kontaktpunkts im Rahmen eines dynamischen Lernprozesses optimiert wird, um den Startpunkt für die Bearbeitungsbewegung möglichst optimal und unter Minimierung der Freilaufstrecke auszuwählen, kann die Erfassung des Endpunkts in Echtzeit mittels wenigstens einen der oben genannten Sensoren anhand wenigstens eines der oben genannten Parameter erfolgen. Dies macht es möglich, die Bearbeitungsbewegung unmittelbar nach der Erfassung des Endpunkts abzubrechen, um zur Einsparung von Bearbeitungszeit einen unnötigen wirkungslosen Bearbeitungsweg zu vermeiden.

Eine Weiterbildung des erfindungsgemäßen Verfahrens sieht ferner folgenden Schritt vor:
G) Festlegen des Endpunkts der Bearbeitungsbewegung an einer darauffolgend zu bearbeitenden Schneide des Schneidwerkzeugs nach Maßgabe des erfassten Endpunkts.

Dies bedeutet, dass auch nach Maßgabe der Erfassung des Endpunkts bei der Bearbeitung einer Schneide die Bearbeitungsbewegung für eine nachfolgende Bearbeitung einer weiteren Schneide, gegebenenfalls derselben oder einer hiervon unterschiedlichen Schneide, dynamisch angepasst werden kann.

Wie vorstehend bereits ausgeführt, lässt sich das Verfahren zur Bearbeitung unterschiedlicher Schneiden und Schneidenflächen einsetzen. Dabei kann vorgesehen sein, dass das erfindungsgemäße Verfahren wahlweise zur Bearbeitung vorgegebener ausgewählter Flächen der zu bearbeitenden Schneiden des Schneidwerkzeugs einsetzbar ist, insbesondere zur Bearbeitung von Freiflächen, Spanflächen, Fasenflächen etc.

Ferner kann das erfindungsgemäße Verfahren dazu genutzt werden, schneidwerkzeugsspezifische Eigenschaften zu erfassen. So ist es beispielsweise möglich, insbesondere von Verschleiß oder Ausbrüche an einzelnen Schneiden oder des Fehlens einzelner Schneiden am Schneidwerkzeug zu erkennen.

Erfindungsgemäß sind grundsätzlich unterschiedliche Bearbeitungsarten denkbar. Gemäß einer bevorzugten Ausführungsvariante der Erfindung kann vorgesehen sein, dass das Bearbeitungswerkzeug ein Schleifwerkzeug umfasst, insbesondere eine Schleifscheibe. Alternativ hierzu kann dieses aber auch ein Fräswerkzeug oder ein Drehwerkzeug umfassen.

Die Erfindung betrifft ferner eine Vorrichtung zum sequenziellen Bearbeiten einer Mehrzahl von Schneiden eines Schneidwerkzeugs, insbesondere eines Kreissägeblatts oder eines Bandsägeblatts, mit einem Bearbeitungswerkzeug, insbesondere zum Ausführen des Verfahrens der vorstehend beschriebenen Art, wobei die Vorrichtung umfasst:
- eine Aufnahme zum Aufnehmen und Halten des zu bearbeitenden Schneidwerkzeugs mit einer Mehrzahl von zu bearbeitenden Schneiden,
- eine Einspann- und Vorschubeinrichtung zum relativen Verlagern des Schneidwerkzeugs sowie des Bearbeitungswerkzeugs zueinander, wobei das relative Verlagern des Schneidwerkzeugs sowie des Bearbeitungswerks zueinander ein Anfahren eines ausgewählten Startpunkts einer zu bearbeitenden Schneide mit dem Bearbeitungswerkzeug mit einer Anfahrgeschwindigkeit und ein Ausführen einer Bearbeitungsbewegung an der ausgewählten zu bearbeitenden Schneide mit dem Bearbeitungswerkzeug umfasst, wobei die Bearbeitungsbewegung von dem Startpunkt ausgeht, mit einer Bearbeitungsgeschwindigkeit entlang einer zu bearbeitenden Fläche der ausgewählten zu bearbeitenden Schneide erfolgt und an einem Endpunkt der Bearbeitung endet;
- eine Sensorik zum Erfassen eines Kontaktpunkts, an dem das Bearbeitungswerkzeug eine zu bearbeitende Schneide berührt; und
- einer Steuer- und Bedieneinheit, die dazu ausgebildet ist, nach Maßgabe des beim Bearbeiten einer Schneide ermittelten Kontaktpunkts in der Folge ein Anfahren des Kontaktpunkts an einer darauffolgend zu bearbeitenden Schneide unter Berücksichtigung einer erfassten Freilaufstrecke auszuführen.

Eine Weiterbildung der erfindungsgemäßen Vorrichtung sieht vor, dass die Steuer- und Bedieneinheit dazu ausgebildet ist, beim Anfahren des Kontaktpunkts an der darauffolgend zu bearbeitenden Schneide des Schneidwerkzeugs die Bearbeitungsbewegung, um die Freilaufstrecke zu verkürzen.

Ferner kann bei der erfindungsgemäßen Vorrichtung vorgesehen sein, dass das Bearbeitungswerkzeug ein Schleifwerkzeug umfasst, insbesondere eine Schleifscheibe. Alternativ hierzu kann auch ein Drehwerkzeug, ein Fräswerkzeug oder dergleichen als Bearbeitungswerkzeug eingesetzt werden.

Ferner kann die erfindungsgemäße Vorrichtung derart ausgebildet sein, dass die Sensorik zum Erfassen der Kontaktpunkts oder/und Endpunkts der Bearbeitung einen Akustiksensor oder/und einen elektrischen Sensor oder/und einen optischen Sensor umfasst.

Im Folgenden wird die Erfindung anhand von Figuren beispielhaft erläutert. Es stellen dar:
- Fig. 1: eine schematische Darstellung einer erfindungsgemäßen Vorrichtung zum Bearbeiten von Werkstücken, die als Schleifmaschine zur Bearbeitung von Kreissägeblättern ausgebildet ist;
- Fig. 2: eine schematische Darstellung eines Kreissägeblatts mit einer Ungleichteilung der mit Schneiden versehenen Zähne;
- Fig. 3a - 3f: eine schematische Darstellung verschiedener Bearbeitungsschritte zur Beschreibung des erfindungsgemäßen Verfahrens;
- Fig. 4: eine schematische Darstellung eines auf die Schritte gemäß der Figuren 3a bis 3f folgenden Schrittes bei einer oszillierenden Bearbeitung ein und derselben Schneide; und
- Fig. 5: eine schematische Darstellung eines auf die Schritte gemäß der Figuren 3a bis 3f folgenden Schrittes bei einer Bearbeitung einer nachfolgenden Schneide.

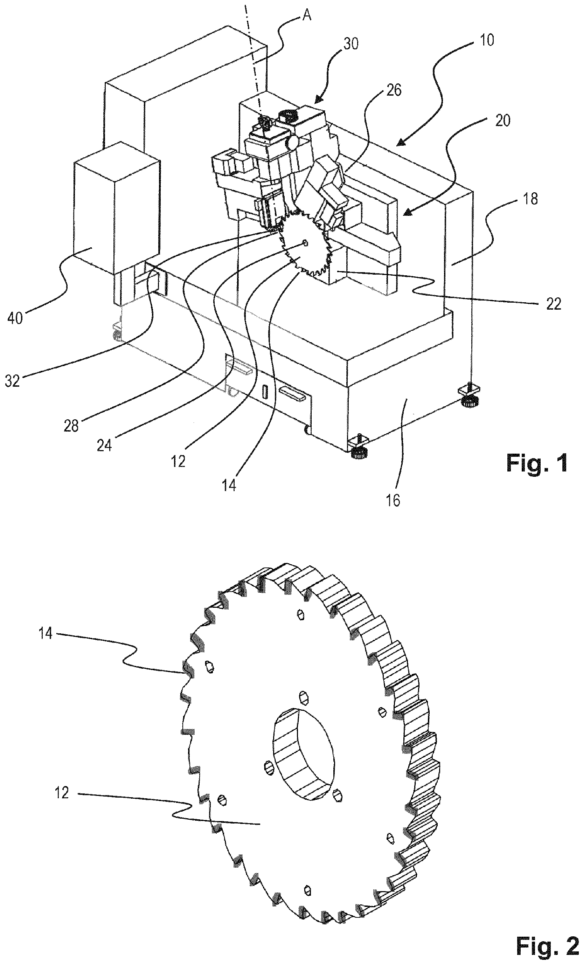

Figur 1 zeigt eine schematische Darstellung einer erfindungsgemäßen Vorrichtung zum Bearbeiten von Werkstücken, die als Schleifmaschine 10 zur Bearbeitung eines Kreissägeblatts 12 mit einer Mehrzahl von Schneidzähnen 14 ausgebildet ist. Derartige Schneidzähne 14 sind im vorliegenden Ausführungsbeispiel mit hartmetallbestückten Schneiden ausgebildet, die einer Schleifbearbeitung unterzogen werden. Eine derartige Schleifbearbeitung kann eine erstmalige Bearbeitung der betreffenden Schneide an ausgewählten Oberflächen sein oder eine Schleifbearbeitung an einer verschlissenen Schneide eines benutzten Kreissägeblattes 12.

Die abgebildete Schleifmaschine 10 weist ein Maschinengestell 16 mit einem im Wesentlichen senkrecht stehenden Träger 18 auf, an dem eine Bearbeitungs- und Vorschubeinheit 20 angeordnet ist. Diese umfasst eine Einspann- und Vorschubeinrichtung 22, an der ein Aufnahmedorn 24 zur definierten Aufnahme des Kreissägeblattes 12 ausgebildet ist. Das Kreissägeblatt 12 lässt sich in bekannter Weise auf dem Aufnahmedorn 24 fixieren. Ferner erkennt man eine Vorschubeinrichtung 26, mit der sich das Kreissägeblatt 12 um den Aufnahmedorn 24 herum schrittweise verschieben lässt, sodass jeder der Schneidzähne 14 bearbeitet werden kann. Die Bearbeitung eines einzelnen Schneidzahns 14 erfolgt an einer bestimmten Bearbeitungsposition, die sich beispielsweise nahe der 9:00 Uhr Position des Kreissägeblattes 12 befindet, die in Figur 1 mit dem Bezugszeichen 28 gekennzeichnet ist.

Die Schleifmaschine 10 weist ferner einen Bearbeitungskopf 30 auf, der in an sich bekannter Weise um mehrere Achsen verschwenkbar und relativ zur Einspann- und Vorschubeinrichtung 22 verlagerbar ist. Ferner weist der Bearbeitungskopf 30 ein Bearbeitungswerkzeug auf, das in Form einer um eine Rotationsachse A drehangetriebene Schleifscheibe 32 ausgebildet ist. Wichtig ist, dass sich durch verschiedene Vorschubeinrichtungen eine Relativbewegung zwischen der Schleifscheibe 32 und dem Kreissägeblatt 12 erzielen lässt. Insbesondere ist vorgesehen, dass die Schleifscheibe relativ zu dem aktuell zu bearbeitenden Schneidzahn 14 an der Bearbeitungsposition 28 über eine Zustellbewegung mit einer variablen Zustellgeschwindigkeit verlagert und entlang dieses Schneidzahns 14 zur Bearbeitung bewegt werden kann. Die Zustellgeschwindigkeit kann dabei derart variiert werden, dass sie beispielsweise dann, wenn kein Kontakt zwischen der Schleifscheibe 32 und dem zu bearbeitenden Schneidzahns 14 des Kreissägeblatts 12 besteht, eine höhere Geschwindigkeit zum Anfahren der Schleifscheibe 32 an das Kreissägeblatt 12 gewählt werden kann, d. h. eine sogenannte Anfahrgeschwindigkeit. Während der Bearbeitung des betreffenden Schneidzahns 14 lässt sich dann die Zustellgeschwindigkeit auf eine gewünschte Bearbeitungsgeschwindigkeit reduzieren.

Ferner ist in Figur 1 eine Steuer- und Bedieneinheit 40 zu erkennen, mit der sich die Schleifmaschine 10 programmieren und bedienen lässt und die eine numerische Steuereinheit enthält, um die verschiedenen Komponenten, insbesondere die Einspann- und Vorschubeinrichtung 22 sowie den Bearbeitungskopf 30 mit dem Antrieb für die Schleifscheibe 32 anzusteuern.

Figur 2 zeigt beispielhaft ein Kreissägeblatt 12 in vergrößerter Darstellung mit einer Vielzahl von Schneidzähnen 14. Die Besonderheit dieses Kreissägeblatt liegt darin, dass die Schneidzähne 14 entlang seines Umfangs ungleichmäßig verteilt sind, beispielsweise deshalb, weil unterschiedliche Zahnteilungen oder/und unterschiedliche Zahnabmessungen oder/und unterschiedliche Zahngeometrien vorgesehen sind. Derartige Kreissägeblatt der 12 mit ungleichmäßig verteilten Zähnen 14 sind aus dem Stand der Technik bekannt. Die Schwierigkeit bei der Bearbeitung derartiger Kreissägeblätter 12 mit Ungleichteilung besteht darin, dass sich anhand der Lage eines gerade bearbeiteten Schneidzahns nicht zwingend auf die genaue Lage eines darauffolgend zu bearbeitenden Zahns schließen lässt. Darüber hinaus unterscheiden sich auch die Geometrie liegen, sodass eine Bearbeitungsbewegung eines gerade bearbeiteten Schneidzahns nicht zwingend geeignet ist, um eine Bearbeitung des folgenden Schneidzahns durchzuführen.

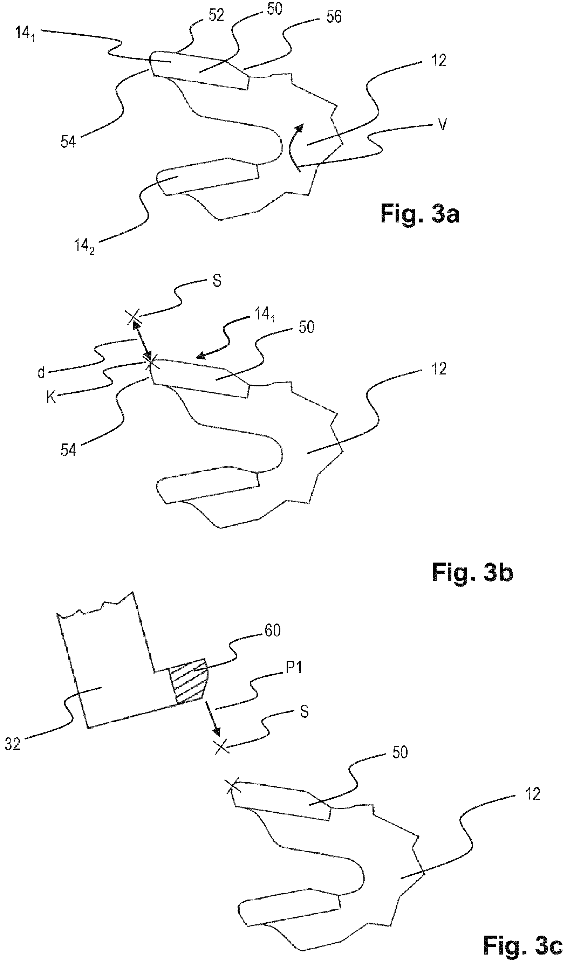

An diesem Problem setzt die vorliegende Erfindung an, die im Folgenden mit Bezug auf die Figuren 3a bis 3f sowie 4 und 5 beschrieben wird.

In Figur 3a erkennt man schematisch einen Ausschnitt eines Kreissägeblatt 12 mit zwei aufeinanderfolgenden Schneidzähne 14₁ und 14₂. Jeder der Schneidzähne 14₁ und 14₂ weist eine Schneide 50 auf mit einer Spanfläche 52, einer Freifläche 54 und einer Zahnbodenfase 56. Es sei in diesem Zusammenhang darauf hingewiesen, dass die Reihenfolge der aufeinanderfolgenden Schneidzähne 14₁ und 14₂ lediglich beispielhaft zu verstehen ist. In dem vorliegenden Beispiel wird das Kreissägeblatt 12 nach erfolgter Bearbeitung des Schneidzahnes 14, durch eine rotatorische Vorschubvorrichtung im Uhrzeigersinn V um einen Zahn weitergedreht und dadurch der folgende Schneidzahn 14₂ einer Bearbeitung zugänglich gemacht. Die Vorschubrichtung im Uhrzeigersinn ist als beispielhafte Ausführungsvariante gewählt. Eine Vorschubrichtung gegen den Uhrzeigersinn ist ebenso im Sinne der Erfindung. Im Falle einer rotatorischen Vorschubrichtung gegen den Uhrzeigersinn würde ein in den Figuren nicht dargestellter weiterer Schneidzahn 14 der Bearbeitung zugänglich gemacht werden. Im vorliegenden Fall soll auf die Schleifbearbeitung der Freifläche 54 eingegangen werden, wobei zunächst der Schneidzahn 14₁ bearbeitet wird. Dieser befindet sich bei einer Bearbeitung in der gezeigten Stellung an der Position 28 gemäß Figur 1. In einem ersten Schritt des erfindungsgemäßen Verfahrens wird die zu bearbeitende Schneide ausgewählt, hier die Schneide 50 des Schneidzahns 14₁.

Sodann wird in einem zweiten Schritt, wie in Figur 3b gezeigt ein Startpunkt ausgewählt, an dem bei einer erstmaligen Bearbeitung einer Schneide 50 an dem Kreissägeblatt 12 eine Bearbeitungsbewegung startet. Der Startpunkt ist in Figur 3b mit S gekennzeichnet. Dieser Startpunkt S ist in einem Abstand d relativ zu einem Kontaktpunkt K angeordnet, an dem die Schleifscheibe 32 im Rahmen der Bearbeitungsbewegung erstmals zur Bearbeitung der Freifläche 54 der Schneide 50 berühren würde. Der Abstand d ist als hinreichend großer Sicherheitsabstand gewählt, um zu vermeiden, dass bei einer erstmaligen Bearbeitung der Schneide 50 frühzeitig ein Kontakt zwischen der Schleifscheibe 32 und der Schneide 50 eintritt.

In einem nächsten Schritt, der in Figur 3c gezeigt ist, nähert sich die Schleifscheibe 32 mit einem profilierten Schleifbereich 60 der Schneide 50 des Schneidzahns 14₁ an. Diese Zustellbewegung der Schleifscheibe 32 an den Startpunkt S gemäß dem Pfeil P1 erfolgt mit einer hohen Zustellgeschwindigkeit, der sogenannten Anfahrgeschwindigkeit. Es kann deshalb eine hohe Zustellgeschwindigkeit zur Verkürzung des Bearbeitungsprozesses gewählt werden, weil bis zum Erreichen des Startpunkts S aufgrund des hinreichend groß gewählten Sicherheitsabstands ausgeschlossen ist, dass die Schleifscheibe 32 mit der Schneide 50 des Schneidzahns 14, kollidiert.

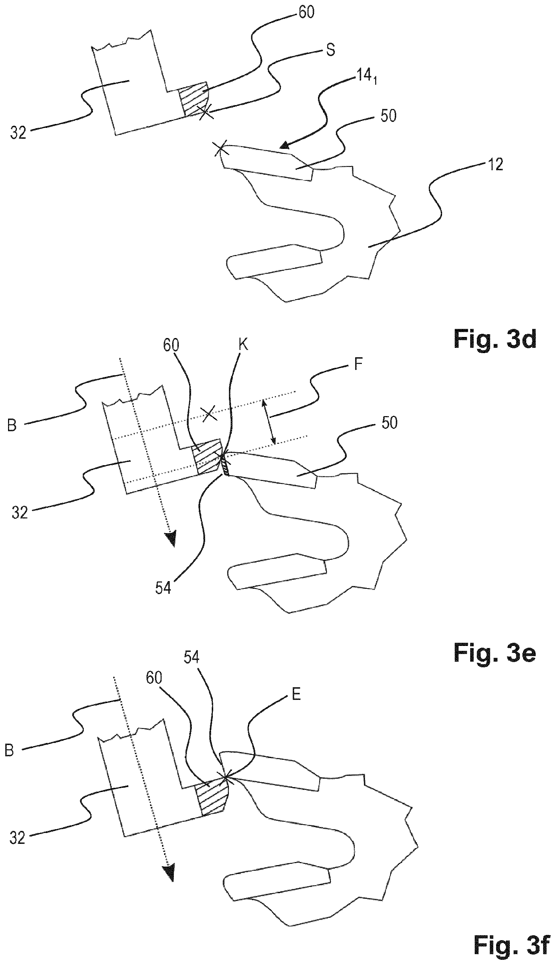

Figur 3d zeigt das Erreichen des Startpunkts S durch den profilierten Schleifbereich 60 der Schleifscheibe 32. Bis zu dieser Position wird die Schleifscheibe 32 mit der hohen Zustellgeschwindigkeit an das Kreissägeblatt 12 herangefahren. Bei Erreichen des Startpunkts S erfolgt eine Reduzierung der Zustellgeschwindigkeit von der Anfahrgeschwindigkeit auf eine Bearbeitungsgeschwindigkeit. In der Folge wird, wie in Figur 3e gezeigt, die Schleifscheibe 32 mit dem profilierten Bearbeitungsbereich 60 von dem Startpunkt S zu dem Kontaktpunkt K bewegt. Dabei wird eine Freilaufstrecke F durchlaufen, die zwischen dem Startpunkt S und dem Kontaktpunkt K liegt. Beim Durchlaufen dieser Freilaufstrecke F erfolgt noch keine Bearbeitung der Freifläche 54, d. h. die Schleifscheibe 32 ist mit ihrem profilierten Bereich 60 noch nicht in Kontakt mit der Schneide 50. Die Freilaufstrecke F stellt sozusagen einen Leerweg dar, bei dessen Durchlaufen noch keine Bearbeitung erfolgt. Dieser Leerweg kann zur Einsparung von Bearbeitungszeit verkürzt oder idealerweise gänzlich vermieden werden.

Betrachtet man wiederum Figur 3e, so erkennt man, dass die Schleifscheibe mit ihrem profilierten Bereich 60 erstmals in Kontakt mit der Schneide 50 kommt und bei einer weiteren Bearbeitungsbewegung entlang des Pfeils B ein Materialabtrag an der Freifläche 54 erfolgt. Das abzutragende Material an der Freifläche 54 ist in Figur 3e schraffiert dargestellt.

Figur 3f zeigt den Zustand, an dem die Schleifscheibe 32 bei der Bearbeitungsbewegung entlang dem Pfeil B mit ihrem profilierten Bereich 60 gerade einen Endpunkt E an der bearbeiteten Freifläche 54 erreicht. Bei dem in Figur 3f gezeigten Bearbeitungszustand ist die Freifläche 54 sozusagen fertig bearbeitet und der Kontakt zwischen der Schleifscheibe 32 mit ihrem profilierten Bereich 60 und der Freifläche 54 bricht gerade an dem Endpunkt E ab.

Sowohl der Kontaktpunkt K als auch der Endpunkt E können während der Bearbeitung des 1. Zahns 14, über Sensoren ermittelt werden. Eine solche Ermittlung des Kontaktpunkt K bzw. des Endpunkt E lässt sich beispielsweise mittels eines Körperschallsensors durchführen, der akustisch erfasst, ob sich die Schleifscheibe 32 in materialabtragendem Kontakt mit dem Material der Schneide 50 befindet oder nicht. Anhand des erfassten Akustikprofils lässt sich ein derartiger Kontakt in an sich bekannter Weise durch Datenanalyse ermitteln. Alternativ oder zusätzlich ist es möglich, das Bestehen eines Kontakts zwischen der Schleifscheibe 32 und der Schneide 50 anhand eines geschlossenen Stromkreises zwischen der Schleifscheibe 32 und dem Kreissägeblatt 12 ermitteln. Auch dies ist an sich aus dem Stand der Technik bekannt. Darüber hinaus sind auch optische Verfahren zur Kontakterkennung erfindungsgemäß einsetzbar.

Die genaue Lage des Kontaktpunkts K sowie des Endpunkts E ermöglicht es, bei einer folgenden Bearbeitung der Schleifscheibe 12, beispielsweise durch eine erneute Bearbeitung desselben Zahns 14 1 oder eine Bearbeitung eines darauffolgenden Zahns 14 2 die Freilaufstrecke F zu reduzieren und damit das Bearbeitungsverfahren deutlich zu beschleunigen.

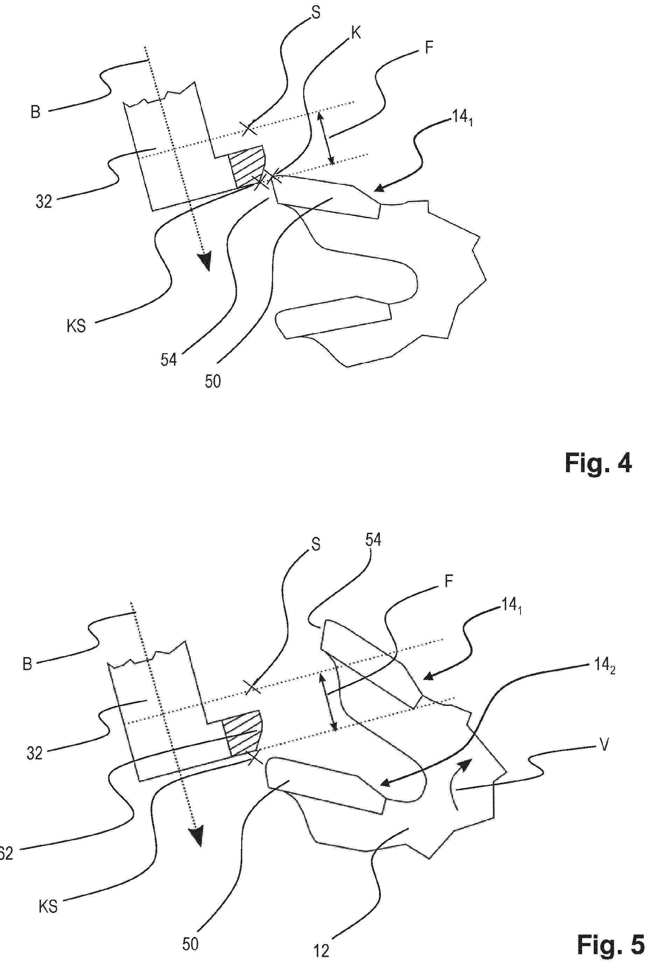

Betrachtet man beispielsweise Figur 4, so erkennt man, dass die Schleifscheibe 32 mit ihrem profilierten Bereich 60 zur erneuten Bearbeitung der Freifläche 54 oberhalb der Schneide 50 positioniert ist. In diesem Fall befindet sich die Schleifscheibe allerdings nicht, wie in Figur 3d gezeigt am Startpunkt S und muss erneut die Freilaufstrecke F durchlaufen. Vielmehr ist in Kenntnis der Lage des Kontaktpunkts K die Schleifscheibe 32 mit ihrem profilierten Bereich 60 an einen mit sehr kleinem Sicherheitsabstand relativ zu der Freilaufstrecke F angepassten Kontaktpunkt KS mit erhöhter Zustellgeschwindigkeit, nämlich der Anfahrgeschwindigkeit herangefahren. Ausgehend von diesem angepassten Kontaktpunkt KS erfolgt dann die Bearbeitungsbewegung entlang des Pfeils B. Es wird bei dem in Figur 4 gezeigten Bearbeitungsvorgang die Freifläche 54 erneut bearbeitet, beispielsweise im Rahmen einer Feinbearbeitung. Zusätzlich oder alternativ können an der Schneide 50 Fasen an der Freifläche angebracht werden. Auch der Bearbeitungshub, d. h. die Länge der Bearbeitungsbewegung wird in Kenntnis der beim erstmaligen Durchlauf des Verfahrens gemäß der Figuren 3a bis 3f angepasst. Nachdem im Zustand gemäß Figur 3f der Endpunkt E ermittelt werden konnte, kann beim nochmaligen bearbeiten der Freifläche 54 der Schneide 50 des Zahns 14, die Bearbeitungsbewegung unmittelbar nach Erreichen des Endpunkt E beendet werden.

Dabei ist anzumerken, dass der Endpunkt E in Echtzeit erfasst werden kann und damit in Echtzeit die Bearbeitungsbewegung unmittelbar nach Erreichen des Endpunkt E beendet werden kann.

Die in Figur 4 gezeigte Variante betrifft eine oszillierende Bearbeitung ein und derselben Schneide 50, hier des Zahns 14₁, d. h. eine mehrfache Bearbeitung ein und desselben Zahns. Figur 5 zeigt eine Variante hierzu. Man erkennt, dass der Zahn 14₁ an seiner Freifläche 54 bereits bearbeitet wurde. Das Sägeblatt 12 wurde gemäß dem Pfeil V um eine rotatorische Vorschubrichtung um einen Zahn weitergedreht, sodass sich nun der Zahn 14₂ an der Position 32 gemäß Figur 1 zur weiteren Bearbeitung innerhalb der Schleifmaschine 10 befindet. In Kenntnis der Geometrie des Kreissägeblatts 12 lässt sich dann die Schleifscheibe 32 mit ihrem profilierten Bereich 60 erneut am Startpunkt S mit dem Erfordernis eines Durchlaufens der Freilaufstrecke F mit reduzierter Bearbeitungsgeschwindigkeit nunmehr direkt am angepassten Kontaktpunkt KS positionieren. Diese Positionierung kann mit erhöhter Zustellgeschwindigkeit, nämlich der Anfahrgeschwindigkeit erfolgen. Ausgehend von dem in Figur 5 gezeigten Zustand erfolgt dann eine einmalige oder auch oszillierenden Bearbeitung des Zahns 14₂ entlang der durch den Pfeil B gekennzeichneten Bearbeitungsbewegung. Dabei ist es durchaus möglich, dass der Zahn 14₂ mit seiner Schneide 50 eine etwas andere Geometrie aufweist als der Zahn 14₁. Dennoch kann davon ausgegangen werden, dass das Anfahren des angepassten Kontaktpunkts KS mit einer erhöhten Zustellgeschwindigkeit, nämlich der Anfahrgeschwindigkeit erfolgen kann, wodurch die Prozessdauer reduziert werden kann.

Ein Aspekt der vorstehend beschriebenen Vorgehensweise gemäß der vorliegenden Erfindung besteht darin, dass durch regelmäßige Erfassung des Kontaktpunkt K sowie des Endpunkt E ein dynamischer Lernprozess einsetzt. Dies wirkt sich insbesondere dann vorteilhaft aus, wenn ein bereits benutztes Kreissägeblatt 12 geschärft werden muss, wobei grundlegende Kenntnis über die Geometrie des Kreissägeblatts 12 vorliegt, allerdings der Grad des Verschleißes an den einzelnen Schneiden 50 des Kreissägeblatts 12 nicht bekannt ist. In einem solchen Fall kann die nach dem erfindungsgemäßen Verfahren arbeitende Schleifmaschine 10 dynamisch erlernen, in welchem Umfang die Schneiden 50 des Kreissägeblatts 12 verschlissen sind. Darüber hinaus lässt sich insbesondere bei einer oszillierenden Bearbeitung einzelner Schneiden 50 eines Kreissägeblatts 12 nach dem erfindungsgemäßen Verfahren dynamisch erlernen, wo der angepasste Kontaktpunkt KS unter möglichst weitgehender Vermeidung einer Freilaufstrecke F für jeden zu bearbeitenden Schneidezahn 14 zu wählen ist.

Erfindungsgemäß lässt sich durch regelmäßiges Verkürzen oder vollständiges Vermeiden der Freilaufstrecke F die Bearbeitungszeit pro Zahn deutlich reduzieren, was insgesamt eine substanzielle Verkürzung der Prozessdauer der Bearbeitung sämtlicher oder ausgewählter Zähne eines Kreissägeblattes zur Folge hat. Dadurch kann die Wirtschaftlichkeit beim Einsatz einer Schleifmaschine 10 gemäß erheblich erhöht werden.

## Patentansprüche

1. Verfahren zum Bearbeiten einer Mehrzahl von Schneiden (50) eines Schneidwerkzeugs, insbesondere eines Kreissägeblatts (12) oder eines Bandsägeblatts, mit einem Bearbeitungswerkzeug (32), insbesondere mit einem Schleifwerkzeug, vorzugsweise mit einer Schleifscheibe (32), umfassend die Schritte:
A) Auswählen einer zu bearbeitenden Schneide (50) des Schneidwerkzeugs;
B) Auswählen eines Startpunkts (S) bezüglich der ausgewählten zu bearbeitenden Schneide (50) des Schneidwerkzeugs;
C) Anfahren des ausgewählten Startpunkts (S) der zu bearbeitenden Schneide (50) mit dem Bearbeitungswerkzeugs (32) mit einer Anfahrgeschwindigkeit;
D) Ausführen einer Bearbeitungsbewegung an der ausgewählten zu bearbeitenden Schneide (50) mit dem Bearbeitungswerkzeugs (32), wobei die Bearbeitungsbewegung von dem Startpunkt (S) ausgeht, sich entlang einer zu bearbeitenden Fläche der ausgewählten zu bearbeitenden Schneide (50) erstreckt und an einem Endpunkt (E) der Bearbeitung endet und wobei die Bearbeitungsbewegung mit einer Bearbeitungsgeschwindigkeit durchgeführt wird;
E) Erfassen einer Freilaufstrecke (F) entlang der Bearbeitungsbewegung an der ausgewählten zu bearbeitenden Schneide (50) zwischen dem ausgewählten Startpunkt (S) und einem Kontaktpunkt (K), an dem das Bearbeitungswerkzeugs (32) die zu bearbeitende Schneide (50) erstmals berührt; und
F) Anfahren des Kontaktpunkts (K), an einer darauffolgend zu bearbeitenden Schneide (50) des Schneidwerkzeugs mit der Anfahrgeschwindigkeit unter Berücksichtigung der in Schritt E) erfassten Freilaufstrecke (F).

2. Verfahren nach Anspruch 1, **dadurch gekennzeichnet, dass** beim Anfahren des Kontaktpunkts (K), an der darauffolgend zu bearbeitenden Schneide (50) des Schneidwerkzeugs gemäß Schritt F) die Bearbeitungsbewegung um die Freilaufstrecke (F) verkürzt wird.

3. Verfahren nach Anspruch 1 oder 2, **dadurch gekennzeichnet, dass** beim Anfahren des Kontaktpunkts (K), an der darauffolgend zu bearbeitenden Schneide (50) des Schneidwerkzeugs gemäß Schritt F) ein Sicherheitsfaktor berücksichtigt wird.

4. Verfahren nach einem der Ansprüche 1 bis 3, **dadurch gekennzeichnet, dass** die darauffolgend zu bearbeitende Schneide (50) gemäß Schritt F) die gemäß den Schritten A) bis E) bereits bearbeitete Schneide (50) des Schneidwerkzeugs ist.

5. Verfahren nach Anspruch 1 bis 3, **dadurch gekennzeichnet, dass** die darauffolgend zu bearbeitende Schneide (50) gemäß Schritt F) eine sich von der gemäß den Schritten A) bis E) bereits bearbeiteten Schneide (50) unterscheidende weitere Schneide (50) des Schneidwerkzeugs ist.

6. Verfahren nach einem der vorangehenden Ansprüche, **dadurch gekennzeichnet, dass** in Schritt F) eine vorbekannte Geometrie des Schneidwerkzeugs berücksichtigt wird.

7. Verfahren nach einem der vorangehenden Ansprüche, **dadurch gekennzeichnet, dass** sich die Anfahrgeschwindigkeit und die Bearbeitungsgeschwindigkeit betragsmäßig unterscheiden, wobei insbesondere die Bearbeitungsgeschwindigkeit gegenüber der Anfahrgeschwindigkeit reduziert ist.

8. Verfahren nach einem der vorangehenden Ansprüche, **dadurch gekennzeichnet, dass** der Kontaktpunkt (K) oder/und Endpunkt (E) der Bearbeitung anhand von Bearbeitungsparametern erfasst wird,
wobei die Bearbeitungsparameter insbesondere wenigstens einen der folgenden Parameter umfassen, anhand derer sich ein Kontakt zwischen dem Bearbeitungswerkzeugs (32) und dem zu bearbeitenden Schneidwerkzeug:
- akustische Parameter,
- elektrische Parameter,
- optische Parameter.

9. Verfahren nach Anspruch 8, **gekennzeichnet durch** den Schritt:
G) Festlegen des Endpunkts (E) der Bearbeitungsbewegung an einer darauffolgend zu bearbeitenden Schneide (50) des Schneidwerkzeugs nach Maßgabe des erfassten Endpunkts (E).

10. Verfahren nach einem der vorangehenden Ansprüche, **dadurch gekennzeichnet, dass** wahlweise vorgegebene ausgewählte Flächen der zu bearbeitenden Schneiden (50) des Schneidwerkzeugs bearbeitet werden, insbesondere Freiflächen, Spanflächen, Fasenflächen etc.

11. Verfahren nach einem der vorangehenden Ansprüche, umfassend den folgenden Schritt:
Erfassen von schneidwerkzeugsspezifischen Eigenschaften, insbesondere von Verschleiß oder Ausbrüchen an einzelnen Schneiden (50) oder des Fehlens einzelner Schneiden (50) am Schneidwerkzeug.

12. Vorrichtung zum sequenziellen Bearbeiten einer Mehrzahl von Schneiden (50) eines Schneidwerkzeugs, insbesondere eines Kreissägeblatts (12) oder eines Bandsägeblatts, mit einem Bearbeitungswerkzeugs (32), insbesondere zum Ausführen des Verfahrens nach einem der vorangehenden Ansprüche, wobei die Vorrichtung umfasst:
- eine Aufnahme zum Aufnehmen und Halten des zu bearbeitenden Schneidwerkzeugs mit einer Mehrzahl von zu bearbeitenden Schneiden (50),
- eine Bearbeitungs- und Vorschubeinheit (20) zum relativen Verlagern des Schneidwerkzeugs sowie des Bearbeitungswerkzeugs (32) zueinander, wobei das relative Verlagern des Schneidwerkzeugs sowie des Bearbeitungswerkzeugs (32) zueinander ein Anfahren eines ausgewählten Startpunkts (S) einer zu bearbeitenden Schneide (50) mit dem Bearbeitungswerkzeugs (32) mit einer Anfahrgeschwindigkeit und ein Ausführen einer Bearbeitungsbewegung an der ausgewählten zu bearbeitenden Schneide (50) mit dem Bearbeitungswerkzeugs (32) möglich ist, wobei die Bearbeitungsbewegung von dem Startpunkt (S) ausgeht, mit einer Bearbeitungsgeschwindigkeit entlang einer zu bearbeitenden Fläche der ausgewählten zu bearbeitenden Schneide (50) erfolgt und an einem Endpunkt (E) der Bearbeitung endet;
- eine Sensorik zum Erfassen eines Kontaktpunkts (K), an dem das Bearbeitungswerkzeugs (32) eine zu bearbeitende Schneide (50) berührt;
- einer Steuer- und Bedieneinheit (40), die dazu ausgebildet ist, nach Maßgabe des beim Bearbeiten einer Schneide (50) ermittelten Kontaktpunktes (K) in der Folge ein Anfahren des Kontaktpunkts (K), an einer darauffolgend zu bearbeitenden Schneide (50) unter Berücksichtigung einer erfassten Freilaufstrecke (F) auszuführen.

13. Vorrichtung nach Anspruch 12, **dadurch gekennzeichnet, dass** die Steuereinheit dazu ausgebildet ist, dass sie beim Anfahren des Kontaktpunkts (K), an der darauffolgend zu bearbeitenden Schneide (50) des Schneidwerkzeugs die Bearbeitungsbewegung um die Freilaufstrecke (F) verkürzt.

14. Vorrichtung nach Anspruch 12 oder 13, **dadurch gekennzeichnet, dass** das Bearbeitungswerkzeugs (32) ein Schleifwerkzeug umfasst, insbesondere eine Schleifscheibe (32).

15. Vorrichtung nach einem der Ansprüche 12 bis 14, **dadurch gekennzeichnet, dass** die Sensorik zum Erfassen des Kontaktpunkts (K), oder/und Endpunkts (E) der Bearbeitung einen Akustiksensor oder/und einen elektrischen Sensor oder/und einen optischen Sensor umfasst.
